(19) Europäisches Patentamt / European Patent Office / Office européen des brevets

(11) **EP 4 344 149 A1**

(12) **EUROPEAN PATENT APPLICATION**

(43) Date of publication:
**27.03.2024 Bulletin 2024/13**

(21) Application number: **22196859.7**

(22) Date of filing: **21.09.2022**

(51) International Patent Classification (IPC):
**H04L 41/0806** (2022.01)    **H04L 41/0896** (2022.01)
**H04L 43/08** (2022.01)

(52) Cooperative Patent Classification (CPC):
**H04L 41/149**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Daniel, Donny Thomas
  85567 Grafing b. München (DE)**
• **Gupta, Rohit
  81379 München (DE)**
• **Jergler, Martin
  85567 Pienzenau (DE)**

(74) Representative: **Siemens Patent Attorneys
Postfach 22 16 34
80506 München (DE)**

(54) **COMMUNICATION SYSTEM AND COMPUTER-IMPLEMENTED METHOD FOR PROCESSING MAINTENANCE COMMANDS**

(57)    A communication system for processing maintenance commands for multiple communication units of the communication system is proposed. The communication system comprising:
a first and a second communication unit, wherein a first communication unit includes a first collector unit specific for the first communication unit and a second communication unit includes a second collector unit specific for the second communication unit, wherein the first and the second collector units are respectively configured to track requests transmitted between the first and the second communication units within an observational time interval to collect request information, and
a maintenance unit configured to determine, in dependence on the collected request information, a set of possible time intervals including an optimal time interval, wherein within the optimal time interval, the first and/or the second communication unit is configured to process a maintenance command.

FIG 1

**Description**

The present invention relates to a communication system, a computer-implemented method and a computer program product for processing maintenance commands.

The continuous delivery of data in modern communication systems implies frequent updates to communication system components, such as communication units. Conventionally, a maintenance window for performing such updates depends on business contexts and deployment-specific requirements. In order to determine the maintenance window, static update scheduler and orchestrated update scheduler are known in the prior art.

A static update scheduler can use cron jobs. A cron job is a (repetitive) task that runs automatically in operating systems, in particular in Unix or Unix-like operating systems such as Linux or macOS. Cron jobs are setup to schedule tasks pertaining to run periodically at fixed times, dates or intervals to perform maintenance on software environments. Since a cron job is suitable for scheduling repetitive tasks, it is very commonly used to frequently update system components and migrate concerned data stores. As an example of a static update scheduler, an update mechanism in Dash is known. Dash is a Python framework used for building and showing real-time views through a web analytic application. However, such an update mechanism focuses solely on the data views (refreshes data displayed on the user interface).

An orchestrated update scheduler allows for automated management of computer systems and software, although it relies on applications that need to be specifically designed for this purpose. Orchestration tools in a software environment tend to ensure that the focus is on deploying applications and servers. In particular, orchestration is about managing complex tasks and workflows, and sophisticated infrastructure is needed to support the deployment and maintenance of such computer systems and software to achieve updates with little downtimes. An example of an orchestrated updater scheduler is an IBM OME-GAMON XE environment. For an update to a data store in this environment, the maintenance process involves the persistent data store checking if a data set if full, then proceeding to a) either making an empty data set active or b) beginning maintenance on the oldest data set.

It is one object of the present invention to improve the updating of data of communication units in a communication system.

According to a first aspect, a communication system for processing maintenance commands for multiple communication units of the communication system is proposed. The communication system comprising:

a first and a second communication unit of the multiple communication units, wherein a first communication unit of the multiple communication units includes a first collector unit specific for the first communication unit and a second communication unit of the multiple communication units includes a second collector unit specific for the second communication unit, wherein the first and the second collector units are respectively configured to track requests transmitted between at least the first and the second communication units within an observational time interval to collect request information indicative of the tracked transmitted requests, and

a maintenance unit configured to determine, in dependence on the collected request information, a set of possible time intervals including at least an optimal time interval, wherein within the at least one optimal time interval, at least the first and/or the second communication unit is configured to process at least a maintenance command received from the maintenance unit.

According to the first aspect, the updating of data of communication units in a communication system is improved.

With the above-described communication system, it is possible to automatically determine an optimal time interval, also referred to as optimal maintenance window, in which at least the first and/or the second communication unit can be updated or can perform another specific maintenance action. This optimal time interval is determined such that in this optimal time interval, the number of requests transmitted between at least the first and the second communication units is minimal. Therefore, the number of requests that has to be rejected if at least parts of the communication system are offline due to the performed update due to the optimal maintenance window is minimal.

This leads to the technical effect of ensuring that downtimes are low, unnecessary downtimes as well as inconsistent backups due to unserviced requests are prevented and the communication system's data retrieval is consistently accessible. This is important as rebuilding and rehosting of communication units of the communication system is thus not necessary. Furthermore, transitive risks between the respective communication units are reduced. A transitive risk arises from the communicative relationship between the respective communication units. It can occur, for example, when the first communication unit inherits a risk from its relationship with the second communication unit. This improves the communication security for the communication between the respective communication units of the communication system.

Thus, compared to the prior art, which uses a static update scheduler to perform an update at a fixed time, with the above-described communication system, it is possible to automatically determine at least an optimal time interval during which the updates are performed. Since the optimal time interval is automatically determined using the communication system according to the first aspect, specific expert or site-specific knowledge that may not be available at all times or may be error prone is no longer necessary.

In addition, since the communication system according to the first aspect depends on the number of transmitted requests, time intervals for successive updates can vary significantly, depending on when communication units in the communication system were accessed. Therefore, by means of the transmitted requests tracked and collected within the observational time interval (historical data), allows the maintenance unit to determine the optimal time interval, thereby reducing significant downtimes which is not possible in an orchestrated infrastructure or in static maintenance windows that use cron jobs. Advantageously, this ensures that data retrieval can still be performed in a case when access to system components change due to business or technical reasons.

For example, a communication system includes multiple systems that can exchange data with each other in a location-dependent and/or location-independent manner. A subset of the multiple communication units as well as the multiple communication units can be divided among several systems at different locations. In particular, the multiple systems may be connected within a wide area network (WAN) for communication. In particular, the communication system can be embodied as an automation system. Further, the automation system may be implemented as a production facility, a factory, a data center, a research facility, a building system, a control system and/or a traffic management and control system.

A request can be an inquiry or a message from at least a first communication unit to a second communication unit to transmit information and/or to get access to the second communication unit. In particular, a request is an application programming interface call or request (API call or API request) or a service invocation. In addition, a request can also comprise multiple requests which are processed by performing an API call. Moreover, the terms "request" and "further request" are equally. A request can be triggered automatically, for example by a computer, or manually by a user.

For example, the function of an API call with respect to the multiple communication units of the communication system is described in the following.

Preferably, a respective first communication unit is formed as an application programming interface (API). An API can provide functionalities to expose the communication system to the environment, such as a further communication system. Specifically, a client unit of the further communication system wants to have data from a third communication unit, for example a database, of the communication system. In order to access or receive this data, the client unit of the another communication system sends an API call to the first communication unit of the communication system. The first communication unit transmits in turn, triggered by this API call, a request to the second communication unit for requesting access to the third communication unit. The second communication unit in turn transmits, triggered by this request from the first communication unit, a request or a further request to the third communication unit for requesting access to the data of the third communication unit. The third communication unit then grants access to this data or denies access and sends a corresponding message back to the client unit via the respective communication units of the communication system. Each of these incoming and/or outgoing requests during this exemplary API call are tracked by the respective collector unit, for example the first, the second and/or the third collector unit, associated with the respective communication unit, for example the first, the second and/or the third communication unit.

Preferably, a respective third communication unit is not configured to transmit an API call or API request to other communication units of the communication system.

In particular, a service invocation is responsible for facilitating the use of a service. Its functions include transmitting commands from a service consumer to a service provider and receiving results. It is also responsible for maintaining the connection between the service consumer and the service provider for the duration of their communication.

The collected request information may be represented as a set of tuples including a mapping of at least all requests transmitted from the first communication unit to all second and third communication units via the second communication units. In particular, a tuple is a finite ordered list (sequence) of elements. Preferably, the respective collector unit is configured to track the requests in real-time, in particular within the observational time interval. In particular, the optimal time interval is determined in dependence on the collected request information within the observational time interval after the observational time interval has ended. Thus, the optimal time interval cannot be determined in advance without the collected request information within the observational time interval.

Specifically, a maintenance window is a time interval during which one or more communication units of a communication system are shutdown in order to update them and are subsequently restarted at the end of the update process. The maintenance window can take into account predetermined heuristic update times, for example to not perform an update if the maintenance window is during the working hours. The maintenance window can be the optimal time interval.

In particular, an unserviced request is a request or an operation that could not be completed due to offline-switched parts of the communication system while performing an update within the maintenance window.

A possible time interval is a time interval, within which a performing of a specific maintenance action by at least one of the multiple communication units is possible and it can be the optimal time interval.

The observational time interval is the time interval, within which the requests of the communication system between the multiple communication units are tracked in order to determine the optimal time interval. Preferably, the minimal observational time interval is one month which ensures that a trace matrix and all associated trace histograms have been received enough collected request information for obtaining sufficient precision for the determination of the at least one optimal time interval.

For example, the maintenance unit is formed as a server, in particular a smart update server. The maintenance unit is preferably configured to transmit maintenance commands only to that respective communication units between which the requests are tracked within the observational time interval and for which the optimal time interval should be determined.

The respective unit, e.g. the maintenance unit, the first communication unit and/or the first collector unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to an embodiment, the maintenance unit is further configured to transmit the at least one maintenance command, upon determining of the set of possible time intervals, to at least the first and/or the second communication unit, wherein the first and/or the second communication unit is configured to perform at least a specific maintenance action based on the at least one received maintenance command within the determined optimal time interval.

Preferably, based on the received maintenance command, the first, the second and/or the third communication unit is configured to perform the specific maintenance action, such as an update, in an advantageous manner within the determined optimal time interval.

According to a further embodiment, the maintenance unit is further configured to rank the possible time intervals of the determined set of possible time intervals in a descending order in dependence on predetermined maintenance features to obtain at least a specific time interval out of the determined set of possible time intervals which is ranked lower than the optimal time interval.

Predetermined maintenance features comprise a number of tracked transmitted requests between at least the first and the second communication units within the observational time interval. For example, for the determined optimal time interval, the above-mentioned number of tracked transmitted requests is one, for a determined second possible time interval, such as the specific time interval, the above-mentioned number of tracked transmitted requests is three and for a determined third possible time interval, the above-mentioned number of tracked transmitted requests is nine. A descending order in this example begins with the certain time interval which has the minimal number of tracked transmitted requests. Thus, the descending order in this example would be: the determined optimal time interval, then the determined second possible time interval and then the determined third possible time interval. Therefore, the determined optimal time interval has the highest ranking, the determined second possible time interval is ranked lower than the optimal time interval and the determined third possible time interval is ranked lower than the second possible time interval and so on.

According to a further embodiment, the maintenance unit is further configured to, if the at least one specific maintenance action performed by the first and/or the second communication unit fails, transmit the at least one obtained specific time interval to the first and/or the second communication unit, wherein the first and/or the second communication unit is further configured to, upon the at least one specific maintenance action performed by the first and/or the second communication unit has failed, perform the specific maintenance action based on the at least one received maintenance command within the at least one obtained specific time interval again.

This embodiment has the advantage that if one specific maintenance action, for example an update, fails during the optimal time interval, a time interval, such as the specific time interval, can be used, which is not optimal, but still suitable, within which the specific maintenance action can be attempted again. This advantageously increases the reliability and fail-safety of the communication units of the communication system.

Preferably, if an update for at least one communication unit, for example the first communication unit, has failed within the optimal time interval, the overall update is rolled back, i.e., all involved communication units are rolled back to the state before the update started. Then, the maintenance unit is configured to select the next time interval, which is ranked lower than the optimal time interval, thus the specific time interval, and is then configured to perform the specific maintenance action within the obtained specific time interval again.

According to a further embodiment, the maintenance unit includes an aggregation unit which is configured to generate a trace matrix and to aggregate the collected request information into the trace matrix.

In particular, the respective collector units, for example the first, the second and the third collector units, are configured to transmit the collected request information to the maintenance unit.

According to a further embodiment, the aggregation unit is further configured to generate a trace histogram including a table with each day of the week and each hour of the day at least within the observational time interval by mapping the aggregated collected request information in the generated trace matrix to at least the table, in which, as a result of the mapping, for each day of the week and for each hour of the day at least within the observational time interval, a number of tracked transmitted requests between at least the first and the second communication units within the observational time interval is indicated.

Preferably, each first communication unit has at least two outputs, a first output and a second output, for transmitting a respective request to other communication units, for example multiple second communication units.

Further, the table of the trace histogram comprises a first subtable and a second subtable.

In particular, the trace matrix represents an aggregation of the collected request information of all first communication units to that second and third communication units which have been called or requested in the context of the (initial) request transmitted in the past from the first communication unit.

The trace matrix is a table which comprises rows, columns and cells.

For example, the precolumn of the table of the trace matrix represents in its rows a respective output of a respective first communication unit of the multiple communication units. In the first row with its columns, after the precolumn, every column extending to the right, represents a respective second communication unit of the multiple second communication units and a respective third communication unit of the multiple third communication units. For example, the second column from the left represents the rows for the second communication unit and the column next to the second column on the right represents the rows for the further communication unit and so on. The column on the far right and its rows extending downward connect the respective rows assigned to the respective outputs of the respective first communication units and the subtables of the trace histogram with each other, in particular by means of referencing by a pointer. For example, each subtable represents one output of a first communication unit. Thus, for example, for the first communication unit, the first output of the first communication unit is referenced by a first pointer to the first subtable and the second output of the first communication unit is referenced by a second pointer to the second subtable. Preferably, in the trace matrix and the trace histogram, the intersection between a row and a column is called a cell.

If, for example, the first communication unit has transmitted a request to the second communication unit, the specific cell of the trace matrix where a first output of the first communication unit and the second communication unit intersect with each other is assigned with the entry "true". By means of the aggregation of the aggregation unit, the aggregation unit is configured to perform the above-described assigning for each cell of the trace matrix in which one of the first communication units and one of the second and/or third communication units intersect with each other. Preferably, only if a respective first communication unit has transmitted a request from one of its outputs to a respective second communication unit and/or then to a respective third communication unit, the specific cell of the trace matrix, in which one of the outputs of the first communication unit and the second communication unit and/or the third communication unit intersect with each is assigned with the entry "true".

The first and the second subtables respectively comprising rows, columns and cells.

Preferably, the precolumn of a respective subtable represents in its rows one respective day of the days of a week, starting with Monday in the top row of the respective subtable and extending downwards till Sunday. Further, if the observational time interval is longer than one week, the respective subtable can also comprise more weeks, like two, three, four or more weeks.

In particular, in each subtable in the first row with its columns, after the precolumn, every column extending to the right, represents a time interval of one hour of a day, thus twenty four time intervals of one hour of a day, starting with the time interval 0 - 1 on the leftmost column and ending with the time interval 23 - 0 on the rightmost column. The cells of the respective subtables with the exception of the precolumn and the first row of the respective subtables each representing a number of tracked transmitted requests, for example 1 or 9 or another number. Thus, for a specific day within a specific time interval for a specific output of a first communication unit, by the cells of the respective subtables of the trace histogram, it can be determined how high the number of tracked transmitted requests on this specific day within this specific time and for this specific output of the first communication unit is.

According to a further embodiment, the maintenance unit is configured to determine, using a specific minimization function which includes at least the number of tracked transmitted requests of the trace histogram as an input, the set of possible time intervals as an output of the specific minimization function, wherein the determined set of possible time intervals includes time intervals, in which the number of tracked transmitted requests between at least the first and the second communication units within the observational time interval is minimal.

By using the specific minimization function, the determination of the optimal time interval is performed in an advantageous way. In particular, the specific minimization function is a mathematical minimization function.

The optimal time interval is the time interval out of the determined set of possible time intervals, in which the number of tracked transmitted requests between at least the first and the second communication units within the observational time interval is minimal. Also, the optimal time interval is the time interval out of the determined set of possible time intervals, in which the number of tracked transmitted requests between at least the first, the second and the third communication units within the observational time interval is minimal.

Preferably, the determining of the set of possible time intervals by the maintenance unit can be divided in the following substeps:

First, the maintenance unit is configured to define a set of communication units that need to be updated, for example the first and the second communication unit. The set of communication units that need to be updated can also comprise the first, the second and the third communication unit or multiple first, second and/or third communication units. This set of communication units that need to be updated is denoted with $U_c$.

Second, the maintenance unit is configured to determine a set of endpoints $U_{API}$ (also called API endpoints), which are the respective outputs of the multiple first communication units that requests or calls at least one of the second communication units and/or at least one of the third communication units in the set $U_c$ of communication units. The set of endpoints $U_{API}$ can also comprise only one endpoint, such as a first output of the first communication unit. This determination is performed by the maintenance unit by searching through the trace matrix as follows:

For example, the precolumn of the trace matrix represents in its rows a respective output of a respective first communication unit. For each column which represents an $U_c$ component in the trace matrix, for example a second column from the left, which represents the second communication unit, each row of this column is searched through by the maintenance unit whether one of these rows has a specific cell with an entry which is denoted with "true". If the maintenance unit is configured to find such an entry in one of these rows, this entry means an intersection of the API endpoint which has sent a request, i.e. the first output of the first communication unit, with the $U_c$ component which has received this request, i.e. the second communication unit. The same procedure applies to the outputs of the another first communication unit and the another second communication unit and/or third communication units.

As a result of this searching, the set of endpoints $U_{API}$ comprises in this example only a first output of the first communication unit.

Further, based on the determined set of endpoints $U_{API}$, the maintenance unit then knows which subtables of the trace matrix have to be examined for determining the set of possible time intervals $U_t$. As mentioned above, each respective output of the first communication unit has in its row a respective pointer to a respective subtable of the trace matrix. In the present example, the first pointer refers from the first output of the first communication unit to the first subtable. Thus, in this example, the first subtable has to be used in determining the set of possible time intervals $U_t$ for the first and the second communication unit.

Next, as described above, each precolumn of the first subtable represents in its rows one respective day of the days of a week. In particular, as also mentioned above, in the first row with its columns after the precolumn of the first subtable, every column extending to the right represents a time interval of one hour of a day, thus twenty four time intervals of one hour of a day.

Thus, preferably, the maintenance unit is then configured to determine, for each specific day within each specific time interval for a specific output of a first communication unit, by the cells of the first subtable of the trace histogram, how high the number of tracked transmitted requests on these specific days within these specific time intervals and for this specific output of the first communication unit is.

In dependence on the above-mentioned information from the first subtable, in particular from the numbers of tracked transmitted requests between the first output of the first communication unit and the second communication unit, the maintenance unit has then the information about the number of tracked transmitted requests between the first communication unit and the second communication unit within the observational time interval for every day in the week and for every time interval of this day and is then in a next step configured to determine the set of possible time intervals $U_t$.

For this, the maintenance unit is configured to determine the set of possible time intervals, $U_t$, by using the above described number of tracked transmitted requests as an input as well as by using the below-described mathematical minimization function:

$$U_t = MIN\ t = \sum_{api\,\in\,U_{API}} TH_{api}[i,j]$$

with $i \in \{Mon, Tue, Wed, Thu, Fri, Sat, Sun\}$, $j \in \{(0 - 1) ... (23 - 0))$ and $TH_{api}$ which defines the mapping between the outputs of the first communication unit of the trace matrix to the respective cells of the respective subtables in the trace histogram.

Further, the certain time interval in the determined set of possible time intervals $U_t$, which has the minimal number of tracked transmitted requests, for example between the first output of the first communication unit and the second communication unit, is the optimal time interval.

Preferably, after calculating $U_t$, the maintenance unit is configured to, based on $U_t$, rank the possible time intervals of the determined set of possible time intervals $U_t$ in the descending order to obtain a ranked set of possible time intervals $U_t^R$. The highest ranked possible time interval is the optimal time interval and has thus the minimal number of tracked transmitted requests between the involved communication units.

For example, once the optimal time interval starts, the maintenance unit is configured to invoke the individual specific maintenance actions for each involved communication unit in parallel and collects their results. The result can be either a successful update or a failed.

According to a further embodiment, the communication system further comprises:

multiple first communication units of the multiple communication units respectively including a first collector unit,
multiple second communication units of the multiple communication units respectively including a second collector unit, and/or
at least a third communication unit of the multiple communication units including a third collector unit specific for the third communication unit.

Preferably, the communication system comprises multiple third communication units of the multiple communication units respectively including a third collector unit.

According to a further embodiment, within the observational time interval, at least one of the multiple first communication units is configured to transmit requests at least to one of the second communication units, wherein the at least one second communication unit is configured to transmit, triggered by the received transmitted requests, further requests to at least another second communication unit of the multiple second communication units and/or to the third communication unit.

According to a further embodiment, at least one of the first collector units is configured to track the requests transmitted from the first communication unit to the second communication unit and/or to the at least another second communication unit to collect request information indicative of the requests transmitted from the first communication unit to the second communication unit and/or to the at least another second communication unit, that at least one of the second collector units is configured to track the requests transmitted from the first communication unit to the second communication unit and/or to track the further requests transmitted from the second communication unit to the at least another second communication unit and/or to the at least one third communication unit to collect request information indicative of the requests transmitted from the first communication unit to the second communication unit and/or indicative of the further requests transmitted from the second communication unit to the at least another second communication unit and/or to the at least one third communication unit, and/or that the at least one third collector unit is configured to track the further requests transmitted at least from the second communication unit to the at least one third communication unit to collect request information indicative of the further requests transmitted from the second communication unit to the at least one third communication unit.

According to a further embodiment, a specific maintenance action is formed as an update for at least the first and/or the second communication unit, a restart of at least the first and/or the second communication unit and/or a rollback of a specific maintenance action, in particular an update performed at least by the first and/or the second communication unit.

Preferably, a maintenance command comprises also at least one control command or multiple control commands for controlling the respective communication units of the multiple communication units. Further, a specific maintenance action is formed as an update also for at least the third communication unit, a restart of at least the third communication unit and/or a rollback of a specific maintenance action, in particular an update performed at least by the third communication unit.

According to a further embodiment, the maintenance unit further includes an interface unit, wherein the interface unit is configured to register newly added specific maintenance actions on the maintenance unit which are formed as new software applications, in particular software releases, for at least the first and/or the second communication unit, and is further configured to pool multiple registered newly added specific maintenance actions to obtain a composite specific maintenance action for at least the first and/or the second communication unit.

In particular, the interface unit is configured to automatically upload and register the new software applications on the maintenance unit. In addition, the interface unit can further be configured to automatically pull new software applications from repositories. Also, a user may manually upload and register the new software applications on the maintenance unit.

Preferably, the composite specific maintenance action comprises multiple specific maintenance actions for one and/or multiple communication units. For example, the composite specific maintenance action includes an update for the first, the second and/or the third communication unit.

According to a further embodiment, at least one first communication unit of the multiple first communication units is formed as an application interface, in particular as an application programming interface or a gateway unit, at least one second communication unit of the multiple second communication units is formed as a backstore component, in particular as an IoT-device or a field device, and/or at least the third communication unit is formed as a datastore component, in particular as a database or a storage unit.

A gateway unit is formed as a gateway. In particular, the gateway refers to a component that establishes a connection between two communication systems.

Any embodiment of the first aspect may be combined with any embodiment of the first aspect to obtain another embodiment of the first aspect.

According to a second aspect, a computer-implemented method for processing maintenance commands for multiple communication units of a communication system is proposed. The communication system includes a first and a second communication unit of the multiple communication units and a maintenance unit, wherein a first communication unit of the multiple communication units includes a first collector unit specific for the first communication unit and a second communication unit of the multiple communication units includes a second collector unit specific for the second communication unit. The method comprising:

a) tracking, by the first and the second collector units, requests transmitted between at least the first and the second communication units within an observational time interval for collecting request information indicative of the tracked transmitted requests, and
b) determining, by the maintenance unit, in dependence on the collected request information, a set of possible time intervals including at least an optimal time interval, wherein within the at least one optimal time interval, at least the first and/or the second communication unit processes at least a maintenance command received from the maintenance unit.

The technical effects and advantages described for the communication system according to the first aspect apply equally to the method according to the second aspect.

Further, embodiments and features described with reference to the communication system according to the first aspect apply mutatis mutandis to the method according to the second aspect.

A computer-implemented method is a method which involves the use of a computer, a computer network or other programmable apparatus, where one or more features are realized wholly or partly by means of a computer program.

According to a further embodiment, the method further comprises:

c) transmitting, by the maintenance unit, the at least one maintenance command, upon determining of the set of possible time intervals, to the first and/or the second communication unit, and
d) performing, by the first and/or the second communication unit, at least a specific maintenance action based on the at least one received maintenance command within the determined optimal time interval.

According to a further embodiment, step b) of the method further includes:

b1) generating, by an aggregation unit of the maintenance unit, a trace matrix and aggregating the collected request information into the trace matrix, and
b2) generating, by the aggregation unit, a trace histogram including a table with each day of the week and each hour of the day at least within the observational time interval by mapping the aggregated collected request information in the generated trace matrix to at least the table, in which, as a result of the mapping, for each day of the week and for each hour of the day at least within the observational time interval, a number of tracked transmitted requests between at least the first and the second communication units within the observational time interval is indicated.

According to a further embodiment, step b) of the method further includes:
b3) determining, by the maintenance unit, using a specific minimization function which includes at least the number of tracked transmitted requests of the trace histogram as an input, the set of possible time intervals as an output of the specific minimization function, wherein the determined set of possible time intervals includes time intervals, in which the number of tracked transmitted requests between at least the first and the second communication units within the observational time interval is minimal.

According to a third aspect, a computer program product is proposed which comprises a program code for executing the above-described method according to the second aspect or an embodiment of the second aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1    shows a block diagram of a communication system for processing maintenance commands according to an embodiment;

Fig. 2    shows block diagrams of a trace matrix and a trace histogram according to an embodiment; and

Fig. 3    shows a flow chart illustrating the steps of a method for processing maintenance commands according to an embodiment.

In the Figures, like reference numerals designate like or functionally equivalent elements, unless otherwise indicated.

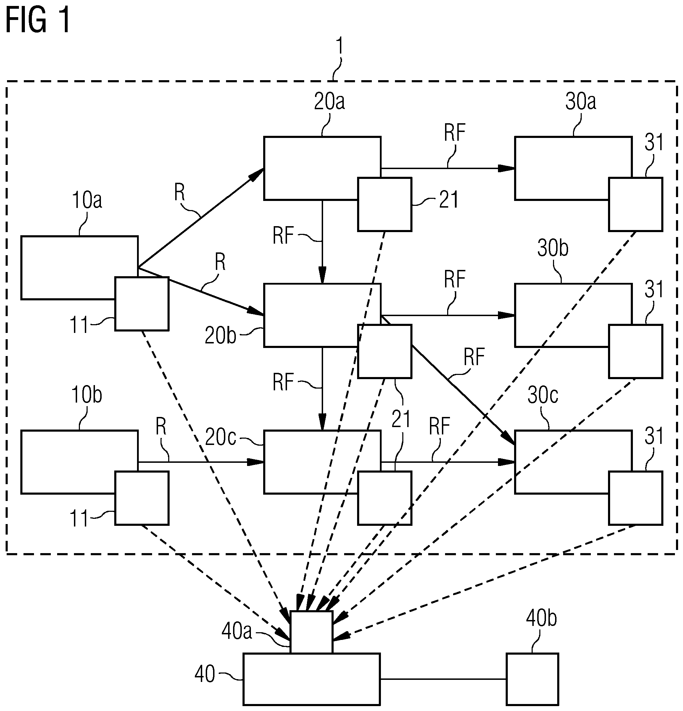

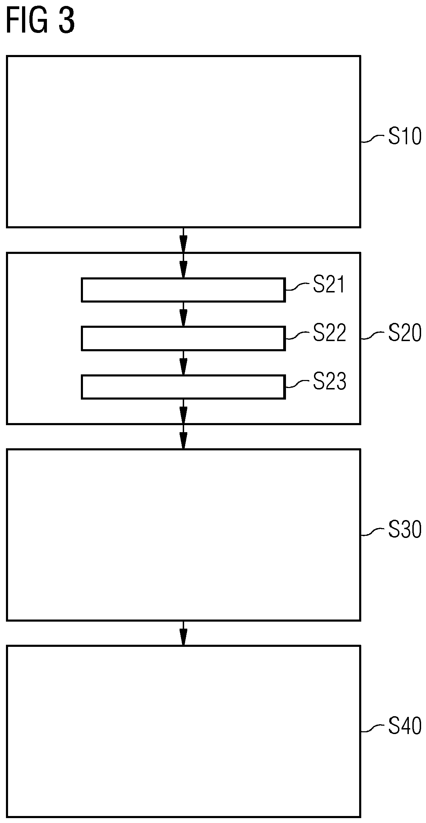

Fig. 1 shows a block diagram of a communication system 1 for processing maintenance commands for multiple communication units 10a, 10b, 20a, 20b, 20c, 30a, 30b, 30c of the communication system 1 according to an embodiment. The communication system 1 comprises multiple first communication units 10a, 10b of the multiple communication units 10a, 10b, 20a - 20c, 30a - 30c respectively including a first collector unit 11, multiple second communication units 20a - 20c of the multiple communication units 10a, 10b, 20a - 20c, 30a - 30c respectively including a second collector unit 21 and multiple third communication units 30a - 30c of the multiple communication units 10a, 10b, 20a - 20c, 30a - 30c respectively including a third collector unit 31 as well as a maintenance unit 40. In addition, references to the method steps of Fig. 3, which describes a method for processing maintenance commands according to an embodiment, are indicated in parentheses in the following explanations of Fig. 1.

In Fig. 1, the first and another first communication unit 10a, 10b of the multiple first communication units 10a, 10b are formed as an application programming interface. Further, in Fig. 1, at least one second communication unit 20a of the multiple second communication units 20a - 20c is formed as an IoT-device (engl. "Internet-of-things"-device) and at least one third communication unit 30a of the multiple third communication units 30a - 30c is formed as a database.

The first collector unit 11 is specific for the first communication units 10a, 10b, the second collector unit 21 is specific for the second communication units 20a - 20c and the third collector unit 31 is specific for the third communication units 30a - 30c, respectively.

In Fig. 1, at least the first and the second collector units 11, 21 are respectively configured to track requests R transmitted between at least the first and the second communication units 10a, 10b, 20a - 20c within an observational time interval to collect request information indicative of the tracked transmitted requests R (see also method step S10 in Fig. 3). Further, the third collector units 31 are respectively configured to track further requests RF transmitted between at least the second and the third communication units 20a - 20c, 30a - 30c within the observational time interval. Further, the respective collector units, the first, second and third collector units 11, 21, 31 are configured to transmit the collected request information to the maintenance unit 40. This is shown in Fig. 1 by the dashed lines with arrows from the respective collector units 11, 21, 31 to an aggregation unit 40a of the maintenance unit 40.

For example, as shown in Fig. 1, within the observational time interval, the multiple first communication units 10a, 10b are respectively configured to transmit requests R (in Fig. 1, three requests R) to the multiple second communication units 20a - 20c, respectively. The multiple second communication units 20a, 20b are configured to transmit, triggered by the received transmitted requests R, further requests RF (in Fig. 1, five further requests RF) to at least another second communication unit 20c of the multiple second communication units 20a - 20c and to the third communication units 30a - 30c.

In detail, Fig. 1 shows that the another first communication unit 10b is configured to transmit a request R to another second communication unit 20c, that the another second communication unit 20c is configured to transmit a further request RF to another third communication unit 30c and that the further second communication unit 20b is configured to transmit a further request RF to a further third communication unit 30b and to the another third communication unit 30c. In addition, the second communication unit 20a is configured to transmit a further request RF to the further second communication unit 20b.

Then, the maintenance unit 40 of Fig. 1 is configured to determine, in dependence on the collected request information, a set of possible time intervals including at least an optimal time interval (see also method step S20 in Fig. 3). Within the at least one optimal time interval, at least the first and/or the second communication unit 10a, 10b, 20a - 20c is configured to process a maintenance command received from the maintenance unit 40 (see also method step S20 in Fig. 3).

Further, the maintenance unit 40 is configured to transmit the maintenance command, upon determining of the set of possible time intervals, to at least the first and/or the second communication unit 10a, 10b, 20a - 20c (see also method step S30 in Fig. 3). In this case, the first and/or the second communication unit 10a, 10b, 20a - 20c is configured to perform a specific maintenance action based on the received maintenance command within the determined optimal time interval (see also method step S40 in Fig. 3). In Fig. 1, a specific maintenance action is formed as an update for at least the first and/or the second communication unit 10a, 10b, 20a - 20c. Alternatively, a specific maintenance action is formed as a restart of at least the first and/or the second communication unit 10a, 10b, 20a - 20c.

In embodiments, the maintenance unit 40 is further configured to rank the possible time intervals of the determined set of possible time intervals in a descending order in dependence on predetermined maintenance features to obtain at least a specific time interval out of the determined set of possible time intervals which is ranked lower than the optimal time interval. Thereby, the maintenance unit 40 is further configured to, if the at least one specific maintenance action performed by the first and/or the second communication unit 10a, 10b, 20a - 20c fails, transmit the at least one obtained specific time interval to the first and/or the second communication unit 10a, 10b, 20a - 20c. Further, the first and/or the second communication unit 10a, 10b, 20a - 20c is configured to, upon the at least one specific maintenance action performed by the first and/or the second communication unit 10a, 10b, 20a - 20c has failed, perform the specific maintenance action based on the at least one received maintenance command within the at least one obtained specific time interval again.

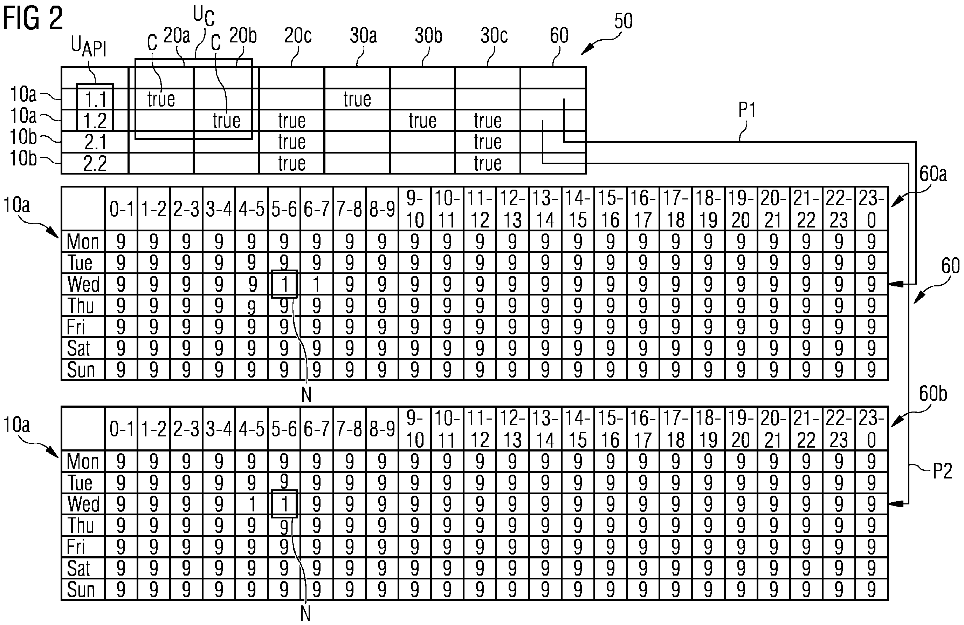

Fig. 2 shows block diagrams of a trace matrix 50 and a trace histogram 60 according to an embodiment. The maintenance unit 40 of Fig. 1 further comprises an aggregation unit 40a (see Fig. 1) and an interface unit 40b (see also Fig. 1). In addition, references to the method steps of Fig. 3, which describes a method for processing maintenance commands according to an embodiment, are indicated in parentheses in the following explanations of Fig. 2.

First, the aggregation unit 40a is configured to generate the trace matrix 50 and to aggregate the collected request information into the trace matrix 50 (see also method step S21 in Fig. 3).

Further, the aggregation unit 40a is configured to generate the trace histogram 60 including a table 60a, 60b with each day of the week and each hour of the day at least within the observational time interval by mapping the aggregated collected request information in the generated trace matrix 50 to at least the table 60a, 60b, in which, as a result of the mapping, for each day of the week and for each hour of the day at least within the observational time interval, a number N of tracked transmitted requests R between at least the first and the second communication units 10a, 10b, 20a - 20c within the observational time interval is indicated (see also method step S22 in Fig. 3). Further, the table 60a, 60b comprises a first subtable 60a and a second subtable 60b which are respectively assigned to at least a respective output of the first communication unit 10a.

Then, the maintenance unit 40 is configured to determine, using a specific minimization function which includes at least the number N of tracked transmitted requests R of the trace histogram 60 as an input, the set of possible time intervals as an output of the specific minimization function, wherein the determined set of possible time intervals includes time intervals, in which the number N of tracked transmitted requests R between at least the first and the second communication units 10a, 10b, 20a - 20c within the observational time interval is minimal (see also method step S23 in Fig. 3).

In dependence on the explanations above, based on Fig. 1 and Fig. 2, it is declared in the following example, how an optimum time interval is determined by means of the maintenance unit 40:

It is assumed that the observational time interval is over and the aggregation unit 40a has generated the trace matrix 50 and the trace histogram 60.

For example, the goal is to determine the set of possible time intervals, in particular the optimal time interval (optimal time window or optimal maintenance window) for an update process (an example for a specific maintenance action) for the combination of the first communication unit 10a, the second communication unit 20a and the further second communication unit 20b.

First, the set $U_c$ of communication units which should be involved in the update process and thus should receive an update is defined. In this case, $U_c$ includes the second communication unit 20a and the further second communication unit 20b. This set $U_c$ of communication units is shown in Fig. 2 in the trace matrix 50 with a rectangle.

Second, the maintenance unit 40 is configured to determine a set of endpoints $U_{API}$ (also called API endpoints), which are the respective outputs of the first communication units 10a, 10b that requests or calls at least one of the second communication units 20a - 20c and/or at least one of the third communication units 30a - 30c in the set $U_c$ of communication units.

This determination is performed by the maintenance unit 40 by searching through the trace matrix 50 as follows:

The trace matrix 50 is a table which comprises rows, columns and cells. For example, the precolumn of the trace matrix 50 represents in its rows a respective output of a respective first communication unit 10a. In the trace matrix 50 in Fig. 2, the first output of the first communication unit 10a is denoted with 1.1 (also called API endpoint 1.1) and the second output of the first communication unit 10a is denoted with 1.2 (also called API endpoint 1.2). Further, the first output of the another first communication unit 10b is denoted with 2.1 (also called API endpoint 2.1) and the second output of the another first communication unit 10b is denoted with 2.2 (also called API endpoint 2.2).

For each column which represents an $U_c$ component in the trace matrix 50, for example the second column from the left in Fig. 2, which represents the second communication unit 20a, each row of this column is searched through by the maintenance unit 40 whether one of these rows has a specific cell C with an entry which is denoted with "true". If the maintenance unit 40 finds such an entry in one of these rows, this entry in this specific cell C means an intersection of the API endpoint which has sent a request, i.e. the first output 1.1 (API endpoint 1.1) of the first communication unit 10a, with the $U_c$ component which has received this request, i.e. the second communication unit 20a. The same procedure applies to the API endpoint 1.2 and the further second communication unit 20b. This is shown in Fig. 2 with the two specific cells C, once at the intersection between API endpoint 1.1 (first output of the first communication unit 10a) and second communication unit 20a and one time at the intersection between API endpoint 1.2 (second output of the first communication unit 10a) and the further second communication unit 20b.

As a result of this searching, the set of endpoints $U_{API}$ comprises a first and a second output of the first communication unit 10a, namely the API endpoints 1.1 and 1.2 (see the precolumn in the trace matrix 50 and the rectangle $U_{API}$ in Fig. 2).

Further, based on the determined API endpoints 1.1 and 1.2, the maintenance unit 40 then knows which subtables 60a, 60b of the trace matrix 60 have to be examined for determining the set of possible time intervals $U_t$. As mentioned above, each respective output 1.1 and 1.2 of the first communication unit 10a has in its row a respective pointer P1, P2 to a respective subtable 60a, 60b of the trace matrix 60. In the present example, a first pointer P1 refers from the API endpoint 1.1 to the first subtable 60a and a second pointer P2 refers from the API endpoint 1.2 to the second subtable 60b. Thus, in this example, the first and the second subtables 60a, 60b has to be used in determining the set of possible

time intervals $U_t$ for the communication units 10a, 20a and 20b.

Next, as described above, the first and the second subtables 60a, 60b respectively comprising rows, columns and cells. Further, each precolumn of the first and second subtable 60a, 60b represents its rows one respective day of the days of a week. In this example, for the sake of simplicity, each subtable 60a, 60b shows only one week of an observational time interval, wherein the entire observational time interval in this example was one month and the remaining three weeks are not shown in the figures. In particular, in the first row with its columns after the precolumn of each subtable 60a, 60b, every column extending to the right represents a time interval of one hour of a day, thus twenty four time intervals of one hour of a day.

The cells of the respective subtables 60a, 60b with the exception of the precolumn and the first row of the respective subtables 60a, 60b each representing a number N of tracked transmitted requests R, for example 1 or 9. Thus, for a specific day within a specific time interval for a specific output of a first communication unit 10a, 10b, by the cells of the respective subtables 60a, 60b of the trace histogram 60, the maintenance unit 40 is configured to determine how high the number N of tracked transmitted requests R on this specific day within this specific time and for this specific output of the first communication unit 10a, 10b is. These numbers N of tracked transmitted requests R or further requests RF (see Fig. 1) in the subtables 60a, 60b has been implemented in the subtables 60a, 60b by a previously performed mapping of the aggregated collected request information in the trace matrix 50 to the subtables 60a, 60b by the aggregation unit 40a.

In dependence on the above-mentioned information from these subtables 60a, 60b, in particular from the numbers N of tracked transmitted requests R between the first output of the first communication unit 10a (API endpoint 1.1) and the second communication unit 20a and between the second output of the first communication unit 10a (API endpoint 1.2) and the further second communication unit 20b, the maintenance unit 40 has the information about the number N of tracked transmitted requests R between these communication units 10a, 20a, 20b within the observational time interval for every day in the week and for every time interval of this day and is then in a next step configured to determine the set of possible time intervals $U_t$.

For this, the maintenance unit 40 is configured to determine the set of possible time intervals, $U_t$, by using the above described number N of tracked transmitted requests R as an input as well as the specific minimization function.

For example, the set of possible time intervals $U_t$, comprises in Fig. 2 the numbers N of tracked transmitted requests R in the row "Wed" in the first subtable 60a and the numbers N of tracked transmitted requests R in the row "Wed" in the second subtable 60b of the trace histogram 60.

With reference to the example in Fig. 2, this means that the maintenance unit 40 is configured to determine the certain time interval (day per week and time interval) out of all time intervals in the first subtable 60a, in particular at least out of set of possible time intervals $U_t$ in the row "Wed" in the first subtable 60a, within which the lowest number N of transmitted requests R has been occurred between the first and the second communication units 10a, 20a. In addition, the maintenance unit 40 is configured to determine in the second subtable 60b, the certain time interval (day per week and time interval), in particular at least out of set of possible time intervals $U_t$ in the row "Wed" in the second subtable 60b, within which the lowest number N of transmitted requests R has been occurred between the first and the further second communication unit 10a, 20b.

Subsequently, the maintenance unit 40 is then configured to determine from the two determined certain time intervals from the two subtables 60a, 60b, at least only one time interval, within which the number N of transmitted requests R between the first communication unit 10a, the second communication unit 20a and the further second communication unit 20b is minimal. This determination is done by using the specific minimization function. The determined only one time interval resulting from the determination is the determined optimal time interval for updating these communication units 10a, 20a, 20b. This determined optimal time interval is in Fig. 2 on a Wednesday in the time window from 5 - 6 o'clock. In addition, the maintenance unit 40 is also configured to determine the set of possible time intervals including the determined optimal time interval. In this case in Fig. 2, the time window from 6 - 7 o'clock on a Wednesday in the first subtable 60a and the time window from 4 - 5 o'clock on a Wednesday in the second subtable 60a are included in the set of possible time intervals but are ranked lower than the determined optimal time interval since the respective time intervals from 6 - 7 o'clock and from 4 - 5 o'clock have no overlapping in both subtables 60a, 60b and are therefore not optimal but suboptimal.

Moreover, the interface unit 40b is configured to register newly added specific maintenance actions on the maintenance unit 40 which are formed as new software applications for at least the first and/or the second communication unit 10a, 10b, 20a - 20c. In addition, the interface unit 40b is configured to pool multiple registered newly added specific maintenance actions to obtain a composite specific maintenance action for the first and/or the second communication unit 10a, 10b, 20a - 20c.

Fig. 3 shows a flow chart illustrating the steps of a method for processing maintenance commands according to an embodiment.

The method comprises the steps S10 - S40. The respective method steps S10 - S40 have already been explained above in terms of Fig. 1, which is why, in order to avoid repetitions, the method steps S10 - S40 are not explained again. Further, method step S20 comprises the substeps S21, S22 and S23 which are explained above in terms of Fig. 2, which is why, in order to avoid repetitions, the method steps S21 - S23 are also not explained again.

Although the present invention has been described in accordance with preferred embodiments, it is obvious for the person skilled in the art that modifications are possible in all embodiments.

Reference Numerals:

| | |
|---|---|
| 1 | communication system |
| 10a | first communication unit |
| 10b | another first communication unit |
| 11 | first collector unit |
| 20a | second communication unit |
| 20b | further second communication unit |
| 20c | another second communication unit |
| 21 | second collector unit |
| 30a | third communication unit |
| 30b | further third communication unit |
| 30c | another third communication unit |
| 31 | third collector unit |
| 40 | maintenance unit |
| 40a | aggregation unit |
| 40b | interface unit |
| 50 | trace matrix |
| 60 | trace histogram |
| 60a | first subtable |
| 60b | second subtable |
| | |
| C | specific cell |
| N | number |
| P1 | first pointer |
| P2 | second pointer |
| R | request |
| RF | further request |
| S10 | method step |
| S20 | method step |
| S21 | method step |
| S22 | method step |
| S23 | method step |
| S30 | method step |
| S40 | method step |
| $U_{API}$ | set of endpoints |
| $U_c$ | set of communication units |

**Claims**

1. Communication system (1) for processing maintenance commands for multiple communication units (10a, 10b, 20a, 20b, 20c, 30a, 30b, 30c) of the communication system (1), the communication system (1) comprising:

a first and a second communication unit (10a, 10b, 20a - 20c) of the multiple communication units (10a, 10b, 20a - 20c, 20c, 30a - 30c), wherein a first communication unit (10a, 10b) of the multiple communication units (10a, 10b, 20a - 20c, 30a - 30c) includes a first collector unit (11) specific for the first communication unit (10a, 10b) and a second communication unit (20a - 20c) of the multiple communication units (10a, 10b, 20a - 20c, 30a - 30c) includes a second collector unit (21) specific for the second communication unit (20a - 20c), wherein the first and the second collector units (11, 21) are respectively configured to track requests (R) transmitted between at least the first and the second communication units (10a, 10b, 20a - 20c) within an observational time interval to collect request information indicative of the tracked transmitted requests (R), and

a maintenance unit (40) configured to determine, in dependence on the collected request information, a set of possible time intervals including at least an optimal time interval, wherein within the at least one optimal time interval, at least the first and/or the second communication unit (10a, 10b, 20a - 20c) is configured to process at least a maintenance command received from the maintenance unit (40).

2. Communication system according to claim 1, **characterized in**
that the maintenance unit (40) is further configured to transmit the at least one maintenance command, upon determining of the set of possible time intervals, to at least the first and/or the second communication unit (10a, 10b, 20a - 20c), wherein the first and/or the second communication unit (10a, 10b, 20a - 20c) is configured to perform at least a specific maintenance action based on the at least one received maintenance command within the determined optimal time interval.

3. Communication system according to claim 1 or 2, **characterized in**
that the maintenance unit (40) is further configured to rank the possible time intervals of the determined set of possible time intervals in a descending order in dependence on predetermined maintenance features to obtain at least a specific time interval out of the determined set of possible time intervals which is ranked lower than the optimal time interval.

4. Communication system according to claim 3, **characterized in**
that the maintenance unit (40) is further configured to, if the at least one specific maintenance action performed by the first and/or the second communication unit (10a, 10b, 20a - 20c) fails, transmit the at least one obtained specific time interval to the first and/or the second communication unit (10a, 10b, 20a - 20c), wherein the first and/or the second communication unit (10a, 10b, 20a - 20c) is further configured to, upon the at least one specific maintenance action performed by the first and/or the second communication unit (10a, 10b, 20a - 20c) has failed, perform the specific maintenance action based on the at least one received maintenance command within the at least one obtained specific time interval again.

5. Communication system according to one of claims 1 - 4, **characterized in**
   **that** the maintenance unit (40) includes an aggregation unit (40a) which is configured to generate a trace matrix (50) and to aggregate the collected request information into the trace matrix (50).

6. Communication system according to claim 5, **characterized in**
   **that** the aggregation unit (40a) is further configured to generate a trace histogram (60) including a table (60a, 60b) with each day of the week and each hour of the day at least within the observational time interval by mapping the aggregated collected request information in the generated trace matrix (50) to at least the table (60a, 60b), in which, as a result of the mapping, for each day of the week and for each hour of the day at least within the observational time interval, a number (N) of tracked transmitted requests (R) between at least the first and the second communication units (10a, 10b, 20a - 20c) within the observational time interval is indicated.

7. Communication system according to claim 6, **characterized in**
   **that** the maintenance unit (40) is configured to determine, using a specific minimization function which includes at least the number (N) of tracked transmitted requests (R) of the trace histogram (60) as an input, the set of possible time intervals as an output of the specific minimization function, wherein the determined set of possible time intervals includes time intervals, in which the number (N) of tracked transmitted requests (R) between at least the first and the second communication units (10a, 10b, 20a - 20c) within the observational time interval is minimal.

8. Communication system according to one of claims 1 - 7, **characterized by**:

   multiple first communication units (10a, 10b) of the multiple communication units (10a, 10b, 20a - 20c, 30a - 30c) respectively including a first collector unit (11),
   multiple second communication units (20a - 20c) of the multiple communication units (10a, 10b, 20a - 20c, 30a - 30c) respectively including a second collector unit (21), and/or
at least a third communication unit (30a - 30c) of the multiple communication units (10a, 10b, 20a - 20c, 30a - 30c) including a third collector unit (31) specific for the third communication unit (30a - 30c).

9. Communication system according to claim 8, **characterized in**
   **that**, within the observational time interval, at least one of the multiple first communication units (10a, 10b) is configured to transmit requests (R) at least to one of the second communication units (20a - 20c), wherein the at least one second communication unit (20a, 20b) is configured to transmit, triggered by the received transmitted requests (R), further requests (RF) to at least another second communication unit (20c) of the multiple second communication units (20a - 20c) and/or to the third communication unit (30a - 30c).

10. Communication system according to claim 9, **characterized in**
    **that** at least one of the first collector units (11) is configured to track the requests (R) transmitted from the first communication unit (10a, 10b) to the second communication unit (20a, 20b) and/or to the at least another second communication unit (20c) to collect request information indicative of the requests (R) transmitted from the first communication unit (10a, 10b) to the second communication unit (20a, 20b) and/or to the at least another second communication unit (20c), that at least one of the second collector units (21) is configured to track the requests (R) transmitted from the first communication unit (10a, 10b) to the second communication unit (20a, 20b) and/or to track the further requests (RF) transmitted from the second communication unit (20a, 20b) to the at least another second communication unit (20c) and/or to the at least one third communication unit (30a - 30c) to collect request information indicative of the requests (R) transmitted from the first communication unit (10a, 10b) to the second communication unit (20a, 20b) and/or indicative of the further requests (RF) transmitted from the second communication unit (20a, 20b) to the at least another second communication unit (20c) and/or to the at least one third communication unit (30a - 30c), and/or that the at least one third collector unit (31) is configured to track the further requests (RF) transmitted at least from the second communication unit (20a - 20c) to the at least one third communication unit (30a - 30c) to collect request information indicative of the further requests (RF) transmitted from the second communication unit (20a - 20c) to the at least one third communication unit (30a - 30c).

**11.** Communication system according to one of claims 1 - 10, **characterized in**
that a specific maintenance action is formed as an update for at least the first and/or the second communication unit (10a, 10b, 20a - 20c), a restart of at least the first and/or the second communication unit (10a, 10b, 20a - 20c) and/or a rollback of a specific maintenance action, in particular an update performed at least by the first and/or the second communication unit (10a, 10b, 20a - 20c).

**12.** Communication system according to one of claims 1 - 11, **characterized in**
that the maintenance unit (40) further includes an interface unit (40b), wherein the interface unit (40b) is configured to register newly added specific maintenance actions on the maintenance unit (40) which are formed as new software applications, in particular software releases, for at least the first and/or the second communication unit (10a, 10b, 20a - 20c), and is further configured to pool multiple registered newly added specific maintenance actions to obtain a composite specific maintenance action for at least the first and/or the second communication unit (10a, 10b, 20a - 20c).

**13.** Communication system according to one of claims 8 - 12, **characterized in**
that at least one first communication unit (10a) of the multiple first communication units (10a, 10b) is formed as an application interface, in particular as an application programming interface or a gateway unit, at least one second communication unit (20a) of the multiple second communication units (20a - 20c) is formed as a backstore component, in particular as an IoT-device or a field device, and/or at least the third communication unit (30a - 30c) is formed as a datastore component, in particular as a database or a storage unit.

**14.** Computer-implemented method for processing maintenance commands for multiple communication units (10a, 10b, 20a - 20c, 30a - 30c) of a communication system (1), wherein the communication system (1) includes a first and a second communication unit (10, 10b, 20a - 20c) of the multiple communication units (10a, 10b, 20a - 20c, 30a - 30c) and a maintenance unit (40), wherein a first communication unit (10a, 10b) of the multiple communication units (10a, 10b, 20a - 20c, 30a - 30c) includes a first collector unit (11) specific for the first communication unit (10a, 10b) and a second communication unit (20a - 20c) of the multiple communication units (10a, 10b, 20a - 20c, 30a - 30c) includes a second collector unit (21) specific for the second communication unit (20a - 20c), the method comprising:

a) tracking (S10), by the first and the second collector units (11, 21), requests (R) transmitted between at least the first and the second communication units (10a, 10b, 20a - 20c) within an observational time interval for collecting request information indicative of the tracked transmitted requests (R), and
b) determining (S20), by the maintenance unit (40), in dependence on the collected request information, a set of possible time intervals including at least an optimal time interval, wherein within the at least one optimal time interval, at least the first and/or the second communication unit (10a, 10b, 20a - 20c) processes at least a maintenance command received from the maintenance unit (40).

**15.** Method according to claim 14, **characterized by**:

c) transmitting (S30), by the maintenance unit (40), the at least one maintenance command, upon determining of the set of possible time intervals, to the first and/or the second communication unit (10a, 10b, 20a - 20c), and
d) performing (S40), by the first and/or the second communication unit (10a, 10b, 20a - 20c), at least a specific maintenance action based on the at least one received maintenance command within the determined optimal time interval.

**16.** Method according to claim 14 or 15, **characterized in**
that the step b) (S20) further includes:

b1) generating (S21), by an aggregation unit (40a) of the maintenance unit (40), a trace matrix (50) and aggregating the collected request information into the trace matrix (50), and
b2) generating (S22), by the aggregation unit (40a), a trace histogram (60) including a table (60a, 60b) with each day of the week and each hour of the day at least within the observational time interval by mapping the aggregated collected request information in the generated trace matrix (50) to at least the table (60a, 60b), in which, as a result of the mapping, for each day of the week and for each hour of the day at least within the observational time interval, a number (N) of tracked transmitted requests (R) between at least the first and the second communication units (10a, 10b, 20a - 20c) within the observational time interval is indicated.

**17.** Method according to claim 16, **characterized in**
that the step b) (S20) further includes:
b3) determining (S23), by the maintenance unit (40), using a specific minimization function which includes at least the number (N) of tracked transmitted requests (R) of the trace histogram (60) as an input, the set of possible time intervals as an output of the specific minimization function, wherein the determined set of possible time intervals includes time intervals, in which the number (N) of tracked transmitted requests (R) between at least the first and the second communication units (10a, 10b, 20a - 20c) within the observational time interval is minimal.

**18.** A Computer program product including a program code for executing the method according to one of claims 14 - 17 when run on at least one computer.

# FIG 1

FIG 2

| $U_{API}$ | C 20a | C 20b | 20c | 30a | 30b | 30c | 60 | | 50 |
|---|---|---|---|---|---|---|---|---|---|
| | | $U_C$ | | | | | | | |
| 10a  1.1 | true | | | true | | | | | |
| 10a  1.2 | | true | true | | true | true | | | P1 |
| 10b  2.1 | | | true | | | true | | | |
| 10b  2.2 | | | true | | | true | | | |

10a

| | 0-1 | 1-2 | 2-3 | 3-4 | 4-5 | 5-6 | 6-7 | 7-8 | 8-9 | 9-10 | 10-11 | 11-12 | 12-13 | 13-14 | 14-15 | 15-16 | 16-17 | 17-18 | 18-19 | 19-20 | 20-21 | 21-22 | 22-23 | 23-0 |
|---|---|---|---|---|---|---|---|---|---|---|---|---|---|---|---|---|---|---|---|---|---|---|---|---|
| Mon | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Tue | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Wed | 9 | 9 | 9 | 9 | 9 | 1 | 1 | 9 | 9 | 9 | 9 | 9 | 9 | 9 | 9 | 9 | 9 | 9 | 9 | 9 | 9 | 9 | 9 | 9 |
| Thu | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Fri | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Sat | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Sun | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |

N

60a · 60 · 60b · P2

10a

| | 0-1 | 1-2 | 2-3 | 3-4 | 4-5 | 5-6 | 6-7 | 7-8 | 8-9 | 9-10 | 10-11 | 11-12 | 12-13 | 13-14 | 14-15 | 15-16 | 16-17 | 17-18 | 18-19 | 19-20 | 20-21 | 21-22 | 22-23 | 23-0 |
|---|---|---|---|---|---|---|---|---|---|---|---|---|---|---|---|---|---|---|---|---|---|---|---|---|
| Mon | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Tue | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Wed | 9 | 9 | 9 | 9 | 1 | 1 | 9 | 9 | 9 | 9 | 9 | 9 | 9 | 9 | 9 | 9 | 9 | 9 | 9 | 9 | 9 | 9 | 9 | 9 |
| Thu | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Fri | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Sat | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Sun | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |

N

EP 4 344 149 A1

FIG 3

Europäisches
Patentamt

European
Patent Office

Office européen
des brevets

# EUROPEAN SEARCH REPORT

Application Number

EP 22 19 6859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/048549 A1 (EDWARDS STEPHEN K [US] ET AL) 15 February 2018 (2018-02-15) * abstract * * paragraph [0013] – paragraph [0433] * * figures 1-67 * | 1-18 | INV. H04L41/0806 H04L41/0896 H04L43/08 |
| X | US 2022/014446 A1 (GUPTA GOPAL [IN] ET AL) 13 January 2022 (2022-01-13) * abstract * * paragraph [0015] – paragraph [0108] * * figures 1-5 * | 1-18 | |
| A | US 9 430 502 B1 (PURUSHOTHAMAN MAHESH [US] ET AL) 30 August 2016 (2016-08-30) * abstract * * column 1, line 49 – column 1, line 62 * * column 4, line 12 – column 10, line 26 * * figures 1-5 * | 1-18 | |
| A | US 2019/372826 A1 (SHERR DAVID M [US]) 5 December 2019 (2019-12-05) * abstract * * paragraph [0006] – paragraph [0014] * * paragraph [0032] – paragraph [0119] * * figures 1-7 * | 1-18 | TECHNICAL FIELDS SEARCHED (IPC)  H04L |

The present search report has been drawn up for all claims

| Place of search | Date of completion of the search | Examiner |
|---|---|---|
| Munich | 7 March 2023 | Körbler, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6859

07-03-2023

| Patent document cited in search report | Publication date | Patent family member(s) | Publication date |
|---|---|---|---|
| US 2018048549 A1 | 15-02-2018 | US 2008049641 A1 | 28-02-2008 |
| | | US 2012314573 A1 | 13-12-2012 |
| | | US 2012320784 A1 | 20-12-2012 |
| | | US 2015312283 A1 | 29-10-2015 |
| | | US 2016134502 A1 | 12-05-2016 |
| | | US 2018048549 A1 | 15-02-2018 |
| US 2022014446 A1 | 13-01-2022 | NONE | |
| US 9430502 B1 | 30-08-2016 | NONE | |
| US 2019372826 A1 | 05-12-2019 | US 2019372826 A1 | 05-12-2019 |
| | | US 2021409260 A1 | 30-12-2021 |
| | | WO 2019232154 A1 | 05-12-2019 |